# EUROPÄISCHE PATENTANMELDUNG

(11) **EP 3 753 389 A1**
(43) Veröffentlichungstag der Anmeldung: **23.12.2020**
(21) Anmeldenummer: 20401031.8
(22) Anmeldetag: 19.05.2020
(51) Int. Cl.: A01C 17/00, E01C 19/20, A01C 21/00

(54) **VERFAHREN ZUM AUSBRINGEN VON STREUGUT**

(30) Priorität: 20.06.2019 DE 102019116722
(71) Anmelder: Amazonen-Werke H. Dreyer GmbH & Co. KG, 49205 Hasbergen (DE)
(72) Erfinder: Große Brinkhaus, Andre, 48149 Münster (DE); Heisel, Per-Christian, 49080 Osnabrück (DE); Dertenkötter, Fabian, 48346 Ostbevern (DE)

(57) **Zusammenfassung**

Die Erfindung betrifft ein Verfahren zum Ausbringen von Streugut auf eine landwirtschaftliche Nutzfläche (12) mittels einer landwirtschaftlichen Streumaschine (10), mit den Schritten: Ermitteln einer zu erwartenden Entwicklung (18a-18g) von Streufächereigenschaften zumindest eines von der landwirtschaftlichen Streumaschine (10) erzeugten Streufächers (20a, 20b) während eines aktuellen Streuvorgangs und vorausschauendes Verändern der Streueinstellungen der landwirtschaftlichen Streumaschine (10) während des aktuellen Streuvorgangs unter Berücksichtigung der ermittelten zu erwartenden Entwicklung (18a-18g) der Streufächereigenschaften des zumindest einen von der landwirtschaftlichen Streumaschine (10) erzeugten Streufächers (20a, 20b).

## Beschreibung

Die Erfindung betrifft ein Verfahren zum Ausbringen von Streugut nach dem Oberbegriff des Patentanspruchs 1, eine landwirtschaftliche Streumaschine nach dem Oberbegriff des Patentanspruchs 13 und ein System zum Ausbringen von Streugut nach dem Oberbegriff des Patentanspruchs 15.

Beim Ausbringen von Streugut auf eine landwirtschaftliche Nutzfläche, beispielsweise bei der Düngerausbringung, werden bereits Grenzverläufe von landwirtschaftlichen Nutzflächen berücksichtigt, um die Streueinstellung der landwirtschaftlichen Streumaschine während des Streuvorgangs unter Berücksichtigung des Grenzverlaufs anzupassen. Beispielsweise offenbart die Druckschrift EP 2 868 183 A1 ein Verfahren zum Verteilen von Mineraldünger, bei welchem eine aktuelle Eigenschaft des Streufächers, nämlich die aktuelle Wurfweite des Streufächers, mit dem Abstand zu einer Feldgrenze verglichen wird, um den Streufächer, falls erforderlich, in geeigneter Weise anzupassen.

Die Anpassung von Streueinstellungen erfolgt bisher also lediglich unter Berücksichtigung von Umgebungsinformationen und aktuellen Eigenschaften des Streufächers. In der Druckschrift DE 10 2017 100 668 A1 wird beispielsweise die Ermittlung aktueller Positionen von Teilbreiten innerhalb eines Streufächers beschrieben.

Die voraussichtliche Entwicklung der Streufächereigenschaften während der Ausbringung des Streuguts bleibt bei der Steuerung von Ausbringvorgängen demnach bisher unberücksichtigt. Bekannte Steuerungen berücksichtigen lediglich eine aktuell vorliegende Ausbringsituation, sodass keine vorausschauende Einstellung von Streuparametern möglich ist.

Aktuell nimmt die Verfügbarkeit von Rechenleistung zu akzeptablen Kosten rasant zu. Dies ermöglicht eine berechnungsintensive Simulation eines Streuvorgangs in Echtzeit. Über die Echtzeitsimulation während des Streuvorgangs kann das Streuergebnis erheblich verbessert und/oder Streuvorgaben präziser eingehalten werden.

Die der Erfindung zugrundeliegende Aufgabe besteht somit darin, die Streugutausbringung unter Ausnutzung erhöhter Rechenleistung zu verbessern.

Die Aufgabe wird gelöst durch ein Verfahren der eingangs genannten Art, wobei im Rahmen des erfindungsgemäßen Verfahrens eine zu erwartende Entwicklung von Streufächereigenschaften zumindest eines von der landwirtschaftlichen Streumaschine erzeugten Streufächers während eines aktuellen Streuvorgangs ermittelt wird. Anschließend erfolgt ein vorausschauendes Verändern der Streueinstellungen der landwirtschaftlichen Streumaschine während des aktuellen Streuvorgangs unter Berücksichtigung der ermittelten zu erwartenden Entwicklung der Streufächereigenschaften des zumindest einen von der landwirtschaftlichen Streumaschine erzeugten Streufächers.

Die Erfindung macht sich die Erkenntnis zunutze, dass eine erhöhte Rechenleistung zur Echtzeitsimulation des Streuvorgangs während der Streugutausbringung genutzt werden kann, um eine vorausschauende Betrachtung bei der Streugutausbringung umzusetzen. Über die Echtzeitsimulation des Streuvorgangs während der Streugutausbringung kann beispielsweise eine zu frühzeitige Anpassung oder Unterbrechung der Streugutausbringung im Nahbereich von Verbotszonen vermieden werden. Alternativ oder zusätzlich erlaubt das prädiktive bzw. vorausschauende Ermitteln der zu erwartenden Entwicklung der Streufächereigenschaften das Vermeiden einer verspäteten Anpassung oder einer verspäteten Unterbrechung der Streugutausbringung aufgrund der Nichtbeachtung von Streugutflugzeiten.

Das vorausschauende Verändern der Streueinstellungen der landwirtschaftlichen Streumaschine während des aktuellen Streuvorgangs erfolgt vorzugsweise selbsttätig und/oder wird durch eine Steuerungseinrichtung der landwirtschaftlichen Streumaschine veranlasst. Die landwirtschaftliche Streumaschine kann beispielsweise ein Zweischeiben-Zentrifugal-Düngerstreuer sein. Insbesondere werden im Rahmen des erfindungsgemäßen Verfahrens die zu erwartenden Entwicklungen der Streufächereigenschaften von zwei Streufächern während des aktuellen Streuvorgangs ermittelt. Entsprechend erfolgt vorzugsweise ebenfalls das vorausschauende Verändern der Streueinstellungen der landwirtschaftlichen Streumaschine unter Berücksichtigung der ermittelten zu erwartenden Entwicklungen der Streufächereigenschaften der beiden Streufächer.

In einer bevorzugten Ausführungsform des erfindungsgemäßen Verfahrens werden beim Ermitteln der zu erwartenden Entwicklung der Streufächereigenschaften des zumindest einen von der landwirtschaftlichen Streumaschine erzeugten Streufächers für den aktuellen Streuvorgang bevorstehende Fahrtrichtungsänderungen der landwirtschaftlichen Streumaschine berücksichtigt. Insbesondere bei Fahrtrichtungsänderungen, wie beispielsweise während einer Kurvenfahrt, erfolgt eine dynamische Veränderung der Streufächereigenschaften, welche bisher beim Anpassen der Streueinstellungen der landwirtschaftlichen Streumaschine unberücksichtigt geblieben ist. Die dynamische Streufächerveränderung wird von einer Vielzahl von Parametern beeinflusst. Beispielsweise werden die Streufächereigenschaften aufgrund der Schwenkbewegung der landwirtschaftlichen Streumaschine und des abgeworfenen Streufächers während der Kurvenfahrt und der damit verbundenen Bewegung der landwirtschaftlichen Streumaschine aus der befahrenen Fahrgasse heraus verändert. Ferner erfährt die landwirtschaftliche Streumaschine sowie das durch die landwirtschaftliche Streumaschine auszubringende Streugut während der Kurvenfahrt eine Querbeschleunigung, sodass eine weitere Veränderung der Streufächereigenschaften verursacht wird. Weitere kurvenspezifische Parameter, wie beispielsweise erzeugte Maschinenschwingungen, können ebenfalls die Streufächereigenschaften beeinflussen, genauso wie die Neigung bzw. Ausrichtung der Maschine, bspw. aufgrund Verbringen der Streumaschine über geneigtes Gelände. Durch eine entsprechende Echtzeitsimulation des Streuvorgangs können diese Parameter bereits vor der eigentlichen Fahrtrichtungsänderung zur Anpassung der Streueinstellungen berücksichtigt werden, sodass eine präzise Streugutausbringung auch während einer Fahrtrichtungsänderung umsetzbar ist.

Es ist außerdem ein erfindungsgemäßes Verfahren vorteilhaft, bei welchem das Ermitteln der zu erwartenden Entwicklung der Streufächereigenschaften des zumindest einen von der landwirtschaftlichen Streumaschine erzeugten Streufächers durch eine Datenverarbeitungseinrichtung der landwirtschaftlichen Streumaschine oder durch einen maschinenexternen Simulationscomputer erfolgt. Die Echtzeitsimulation des Streuvorgangs kann folglich durch die landwirtschaftliche Streumaschine selbst durchgeführt werden. Alternativ oder zusätzlich werden die zur Ermittlung der zu erwartenden Entwicklung der Streufächereigenschaften erforderlichen Daten an einen maschinenexternen Simulationscomputer übermittelt, welcher die Ermittlung der zu erwartenden Entwicklung der Streufächereigenschaften dann maschinenextern durchführt. Wenn das Ermitteln der zu erwartenden Entwicklung der Streufächereigenschaften durch einen maschinenexternen Simulationscomputer erfolgt, werden die Ermittlungsergebnisse oder aus den Ermittlungsergebnissen abgeleitete Einstellvorgaben vorzugsweise von dem maschinenexternen Simulationscomputer zurück an die landwirtschaftliche Streumaschine übermittelt. Die Ermittlungsergebnisse oder die aus den Ermittlungsergebnissen abgeleiteten Einstellvorgaben können dann durch die landwirtschaftliche Maschine zum vorausschauenden Verändern der Streueinstellungen genutzt werden.

Ferner ist ein erfindungsgemäßes Verfahren vorteilhaft, bei welchem das Ermitteln der zu erwartenden Entwicklung der Streufächereigenschaften des zumindest einen von der landwirtschaftlichen Streumaschine erzeugten Streufächers das Ermitteln der zu erwartenden Entwicklung der Streufächerausdehnung des zumindest einen von der landwirtschaftlichen Streumaschine erzeugten Streufächers während des aktuellen Streuvorgangs umfasst. Dies kann das Ermitteln der zu erwartenden Entwicklung der Längs- und/oder Querausdehnung des zumindest einen von der landwirtschaftlichen Streumaschine erzeugten Streufächers während des aktuellen Streuvorgangs umfassen. Alternativ oder zusätzlich umfasst das Ermitteln der zu erwartenden Entwicklung der Streufächereigenschaften des zumindest einen von der landwirtschaftlichen Streumaschine erzeugten Streufächers das Ermitteln der zu erwartenden Entwicklung der Streufächerposition und/oder der Streufächerform des zumindest einen von der landwirtschaftlichen Streumaschine erzeugten Streufächers während des aktuellen Streuvorgangs. Die Streufächerposition ändert sich einerseits durch die Bewegung der landwirtschaftlichen Streumaschine auf der landwirtschaftlichen Nutzfläche. Andererseits kann die Streufächerposition ergänzend auch durch das Verändern von Streuparametern der landwirtschaftlichen Streumaschine und/oder äußere Einflüsse, wie beispielsweise Wind oder Regen, beeinflusst werden. Je nach Zusammenhang zwischen Windrichtung und Fahrtrichtung der landwirtschaftlichen Streumaschine kann die Position des Streufächers durch den Wind in Längsrichtung und/oder in Querrichtung verändert werden. Insbesondere während einer Kurvenfahrt kann der Wind zu einer komplexen Veränderung der Streufächerposition führen. Gleiches gilt für die Form des Streufächers, welche ebenfalls durch das Verändern von Streuparametern der landwirtschaftlichen Streumaschine oder durch äußere Einflüsse, wie beispielsweise Wind oder Regen, beeinflusst werden kann.

In einer weiteren bevorzugten Ausführungsform des erfindungsgemäßen Verfahrens werden beim Ermitteln der zu erwartenden Entwicklung der Streufächereigenschaften des zumindest einen von der landwirtschaftlichen Streumaschine erzeugten Streufächers für den aktuellen Streuvorgang geplante Veränderungen der Maschineneinstellungen der landwirtschaftlichen Streumaschine und/oder für den geplanten Streuvorgang zu erwartende Umwelt- und/oder Geländeeinflüsse berücksichtigt. Die Maschineneinstellungen der landwirtschaftlichen Streumaschine können beispielsweise den Aufgabepunkt des Streuguts, die Scheibendrehzahl einer Streuscheibe, den Scheibendurchmesser der Streuscheibe, Streuschaufeleigenschaften der Streuscheibe, die Aufgabemenge an Streugut auf die Streuscheibe, den Lenkwinkel und/oder eine zu einer Veränderung der Bewegungsgeschwindigkeit der landwirtschaftlichen Streumaschine führende Maschineneinstellung umfassen. Die Umwelteinflüsse können Wind- und/oder Regeneinflüsse umfassen. Die Geländeeinflüsse können die Topografie der landwirtschaftlichen Nutzfläche und/oder die Bodenbeschaffenheit der landwirtschaftlichen Nutzfläche betreffen. Beim Ermitteln der zu erwartenden Entwicklung der Streufächereigenschaften des zumindest einen von der landwirtschaftlichen Streumaschine erzeugten Streufächers werden vorzugsweise für den aktuellen Streuvorgang geplante Positionsveränderungen der landwirtschaftlichen Streumaschine und/oder aktuelle Positionsveränderungen der landwirtschaftlichen Streumaschine berücksichtigt. Geplante Positionsveränderungen können beispielsweise geplante Kurvenfahrten der landwirtschaftlichen Streumaschine sein. Durch die Berücksichtigung der aktuellen Positionsveränderung der landwirtschaftlichen Streumaschine kann eine Echtzeiterfassung von Lenkmanövern und Reaktionen auf diese erfolgen, sodass unvorhergesehene Lenkbewegungen erkannt werden können.

In einer anderen bevorzugten Ausführungsform des erfindungsgemäßen Verfahrens sind die beim Ermitteln der zu erwartenden Entwicklung der Streufächereigenschaften des zumindest einen von der landwirtschaftlichen Streumaschine erzeugten Streufächers berücksichtigten geplanten Veränderungen der Maschineneinstellungen der landwirtschaftlichen Streumaschine geplante Veränderungen zumindest des Aufgabepunkts des Streuguts auf zumindest eine Streuscheibe der landwirtschaftlichen Streumaschine während des aktuellen Streuvorgangs und/oder geplante Veränderungen der Scheibendrehzahl der zumindest einen Streuscheibe der landwirtschaftlichen Streumaschine während des aktuellen Streuvorgangs. Über eine Veränderung des Aufgabepunkts des Streuguts auf die zumindest eine Streuscheibe verändert sich der Abwurfwinkel des Streuguts, sodass es zu einer Veränderung der Streufächerposition und/oder der Streufächerform kommt. Durch eine Veränderung der Scheibendrehzahl der zumindest einen Streuscheibe kommt es zu einer Veränderung der Abwurfweite des Streuguts, sodass eine Veränderung der Scheibendrehzahl zu einer Positionsveränderung des Streufächers führt. Die beim Ermitteln der zu erwartenden Entwicklung der Streufächereigenschaften des zumindest einen von der landwirtschaftlichen Streumaschine erzeugten Streufächers berücksichtigten geplanten Veränderungen der Maschineneinstellungen der landwirtschaftlichen Streumaschine sind alternativ oder zusätzlich geplante Veränderungen der Aufgabemenge des Streuguts auf zumindest eine Streuscheibe der landwirtschaftlichen Streumaschine während des aktuellen Streuvorgangs, geplante Veränderungen des Lenkwinkels der landwirtschaftlichen Streumaschine während des aktuellen Streuvorgangs und/oder geplante Veränderungen der Bewegungsgeschwindigkeit der landwirtschaftlichen Streumaschine während des aktuellen Streuvorgangs. Durch eine Veränderung der Aufgabemenge des Streuguts auf die zumindest eine Streuscheibe wird die Ausbringmenge an Streugut verändert. Der Lenkwinkel und die Bewegungsgeschwindigkeit der landwirtschaftlichen Streumaschine haben ebenfalls einen Einfluss auf die Form und/oder die Position des zumindest einen Streufächers und sind aus diesem Grund zur Prognostizierung der Streufächerentwicklung ebenfalls zu berücksichtigen.

In einer weiteren bevorzugten Ausführungsform des erfindungsgemäßen Verfahrens umfassen die beim Ermitteln der zu erwartenden Entwicklung der Streufächereigenschaften des zumindest einen von der landwirtschaftlichen Streumaschine erzeugten Streufächers berücksichtigten zu erwartenden Umwelt- und/oder Geländeeinflüsse zu erwartende Veränderungen der Windstärke und/oder der Windrichtung und/oder zu erwartende Veränderungen in der Neigung der während des Streuvorgangs zu befahrenden landwirtschaftlichen Nutzfläche. Bei einer geplanten Änderung der Fahrtrichtung und/oder Fahrgeschwindigkeit können die daraus resultierenden, relativ zur Streumaschine veränderten Windverhältnisse, also Windstärke und/oder Windrichtung, berücksichtigt werden. Eine zu erwartende Veränderung in der Neigung der zu befahrenden landwirtschaftlichen Nutzfläche wirkt sich auf die Neigung der landwirtschaftlichen Streumaschine aus und kann infolge dieser Maßnahme in geeigneter Weise berücksichtigt werden. Das Verfahren kann ferner das Erfassen der aktuellen Windstärke und/oder Windrichtung umfassen. Ferner kann das Verfahren das Abrufen von Winddaten von einer Datenbank umfassen, sodass die abgerufenen Winddaten beim Ermitteln der zu erwartenden Entwicklung der Streufächereigenschaften berücksichtigt werden können. Beispielsweise weist die landwirtschaftliche Streumaschine eine Windmesseinrichtung auf. Die Windmesseinrichtung kann Bestandteil einer Wetterstation sein, welche in die landwirtschaftliche Streumaschine integriert ist. Die Neigung der landwirtschaftlichen Nutzfläche kann beispielsweise über eine Neigungserfassung erfolgen. Ferner können Topografieinformationen zu der aktuellen landwirtschaftlichen Nutzfläche von einer Datenbank abgerufen und beim Ermitteln der zu erwartenden Entwicklung der Streufächereigenschaften berücksichtigt werden.

Ferner ist ein erfindungsgemäßes Verfahren vorteilhaft, bei welchem beim Ermitteln der zu erwartenden Entwicklung der Streufächereigenschaften des zumindest einen von der landwirtschaftlichen Streumaschine erzeugten Streufächers die aktuelle Position, Geschwindigkeit und/oder Beschleunigung der landwirtschaftlichen Streumaschine und/oder Materialeigenschaften des auszubringenden Streuguts berücksichtigt werden. Zur Ermittlung der aktuellen Position der landwirtschaftlichen Streumaschine kann ein satellitengestütztes Positionserfassungssystem, beispielsweise ein GPS-System, genutzt werden. Aus den Materialeigenschaften des auszubringenden Streuguts kann das Flugverhalten des auszubringenden Streuguts abgeleitet werden.

In einer weiteren bevorzugten Ausführungsform des erfindungsgemäßen Verfahrens wird eine oder werden mehrere Verbotszonen im Nahbereich der landwirtschaftlichen Nutzfläche ermittelt, in welchen eine Streugutausbringung gänzlich zu vermeiden ist oder in welchen eine Toleranzmenge an Streugut nicht zu überschreiten ist. Als Nahbereich der landwirtschaftlichen Nutzfläche wird zumindest der maximale Wurfbereich der landwirtschaftlichen Streumaschine, also die maximale Ausdehnung eines Streufächers, der von einer diesen Bereich passierenden landwirtschaftlichen Streumaschine abgeworfen wird, betrachtet. Das vorausschauende Verändern der Streueinstellungen der landwirtschaftlichen Streumaschine während des aktuellen Streuvorgangs erfolgt dabei vorzugsweise unter Berücksichtigung der ermittelten Verbotszonen. Besonders vorzugsweise umfasst das vorausschauende Verändern der Streueinstellungen der landwirtschaftlichen Streumaschine das Aktivieren einer Grenzstreueinrichtung. Zum Ermitteln der einen oder der mehreren Verbotszonen können beispielsweise Positionsdaten der Verbotszonen von einer Datenbank abgerufen werden. Die Verbotszonen können unterschiedlichen Verbotszonentypen zugeordnet sein, wobei die in den unterschiedlichen Verbotszonentypen einzuhaltenden Streuauflagen voneinander abweichen können. In der Verbotszone eines Typs ist die Streugutsausbringung beispielsweise gänzlich zu vermeiden, wobei entsprechende Verbotszonen sich beispielsweise im Nahbereich von Gewässern, Straßen und/oder Wegen befinden können. In der Verbotszone eines anderen Typs ist die Streugutsausbringung beispielsweise vornehmlich, jedoch nicht gänzlich, zu vermeiden, wobei sich entsprechende Verbotszonen beispielsweise im Bereich von Böschungen oder Hecken befinden können. In der Verbotszone eines weiteren anderen Typs soll die Streugutsausbringung vermieden werden, wobei eine Streugutsausbringung grundsätzlich erlaubt ist. Entsprechende Verbotszonen können sich beispielsweise im Übergangsbereich zu einer benachbarten separaten landwirtschaftlichen Nutzfläche befinden. Ebenso können Verbotszonen diesen Typs beispielsweise ein Teilbereich der landwirtschaftlichen Nutzfläche sein, welcher bereits eine oder mehrere Streugutausbringung(en) des aktuellen Streuvorganges erfahren hat. In vorteilhafter Weise kann so ein unsachgemäßes Überlappen von Streugutausbringungen vermieden werden.

In einer weiteren bevorzugten Ausführungsform des erfindungsgemäßen Verfahrens erfolgt das vorausschauende Verändern der Streueinstellungen der landwirtschaftlichen Streumaschine, wenn die ermittelte zu erwartende Entwicklung der Streufächereigenschaften eine Streufächerausbringung in einer Verbotszone oder die Überschreitung einer Toleranzmenge an Streugut einer Verbotszone erwarten lässt. In diesem Fall werden die Streueinstellungen der landwirtschaftlichen Streumaschine derart vorausschauend angepasst, dass eine Streugutausbringung in der Verbotszone vermieden wird oder die Streugutausbringung derart erfolgt, dass die Toleranzmenge an Streugut einer Verbotszone nicht überschritten wird. Hierzu kann beispielsweise die Streufächerposition, die Streufächerform, die Streufächerausdehnung und/oder die Ausbringmenge angepasst werden. Dies kann beispielsweise über das Verändern des Aufgabepunkts und/oder der Scheibendrehzahl und/oder die Anpassung anderer Streueinstellungen erfolgen.

Es ist außerdem ein erfindungsgemäßes Verfahren bevorzugt, bei welchem die Verbotskriterien zu der einen oder den mehreren ermittelten Verbotszonen im Nahbereich der landwirtschaftlichen Nutzfläche abgerufen werden. Das vorausschauende Verändern der Streueinstellungen der landwirtschaftlichen Streumaschine während des Streuvorgangs erfolgt dabei vorzugsweise unter Berücksichtigung der abgerufenen Verbotskriterien. Die Verbotskriterien können bei der Streugutausbringung einzuhaltende Abstandsauflagen der jeweiligen Verbotszonen sein. Die einzuhaltenden Verbotskriterien können sich regional unterscheiden, sodass eine kriterienkonforme Streugutausbringung in unterschiedlichen Regionen durch einen vorherigen Abruf der Verbotskriterien umgesetzt werden kann. Vorzugsweise werden die Verbotskriterien von einer Datenbank abgerufen. In einer anderen bevorzugten Ausführungsform des erfindungsgemäßen Verfahrens umfasst das vorausschauende Verändern der Streueinstellungen der landwirtschaftlichen Streumaschine das vorausschauende Aktivieren und/oder Deaktivieren von Teilbreiten einer Teilbreitenschaltung der landwirtschaftlichen Streumaschine. Besonders bevorzugt umfasst das Verändern der Streueinstellungen das Aktivieren einer Grenzstreueinrichtung. Über eine entsprechende Teilbreitenschaltung kann die aktive Streufächerform, insbesondere die Längs- und/oder Querausdehnung des Streufächers angepasst werden. Alternativ oder zusätzlich umfasst das vorausschauende Verändern der Streueinstellungen der landwirtschaftlichen Streumaschine das vorausschauende Anpassen des Aufgabepunkts des Streuguts auf die zumindest eine Streuscheibe der landwirtschaftlichen Streumaschine und/oder das vorausschauende Anpassen der Scheibendrehzahl der zumindest einen Streuscheibe der landwirtschaftlichen Streumaschine. Durch das Anpassen des Aufgabepunkts des Streuguts auf die zumindest eine Streuscheibe der landwirtschaftlichen Streumaschine kann der Abwurfwinkel des Streuguts beeinflusst werden. Durch das Anpassen der Scheibendrehzahl der zumindest einen Streuscheibe der landwirtschaftlichen Streumaschine kann die Wurfweite des abgeworfenen Streuguts beeinflusst werden. Alternativ oder zusätzlich umfasst das vorausschauende Verändern der Streueinstellungen der landwirtschaftlichen Streumaschine das vorausschauende Anpassen der Aufgabemenge des Streuguts auf zumindest eine Streuscheibe der landwirtschaftlichen Streumaschine und/oder das vorausschauende Anpassen der Fahrspur und/oder der Fahrroute der landwirtschaftlichen Streumaschine. Durch das Anpassen der Aufgabemenge des Streuguts auf die zumindest eine Streuscheibe der landwirtschaftlichen Streumaschine kann die Ausbringmenge an Streugut beeinflusst werden. Wenn durch Aktivieren und/oder Deaktivieren von Teilbreiten und/oder dem Anpassen des Aufgabepunkts, der Scheibendrehzahl und/oder der Aufgabemenge keine geeignete Anpassung der Streugutausbringung möglich ist, kann alternativ oder ergänzend die Fahrspur und/oder die Fahrroute der landwirtschaftlichen Streumaschine angepasst werden. Beispielsweise wird zum Ausbringen des Streuguts temporär eine seitlich versetzte Fahrspur gewählt. Alternativ oder zusätzlich können über eine alternative Fahrroute lokale Mehrfachausbringungen des Streuguts auf der landwirtschaftlichen Nutzfläche umgesetzt werden, wobei die Summe der Mehrfachausbringungen dann zu der gewünschten Streugutmenge auf dem beabsichtigten Bereich der landwirtschaftlichen Nutzfläche führt. Sprich, es wird eine von der üblichen Überlappung der Streugutausbringungen abweichende Überlappung erzeugt, welche zu einer verbesserten Ausbringung von Streugut auf dem beabsichtigten Bereich führt. Beim Anpassen der Fahrspur und/oder der Fahrroute der landwirtschaftlichen Streumaschine wird eine Routenänderung vorgegeben, um den Streuvorgang möglichst optimal ausführen zu können.

Die der Erfindung zugrundeliegende Aufgabe wird ferner durch eine landwirtschaftliche Streumaschine der eingangs genannten Art gelöst, wobei die erfindungsgemäße landwirtschaftliche Streumaschine eine Datenverarbeitungseinrichtung und eine Steuerungseinrichtung umfasst. Die Datenverarbeitungseinrichtung ist dazu eingerichtet, eine zu erwartende Entwicklung von Streufächereigenschaften zumindest eines von der landwirtschaftlichen Streumaschine erzeugten Streufächers während eines aktuellen Streuvorgangs zu ermitteln. Die Steuerungseinrichtung ist dazu eingerichtet, ein vorausschauendes Verändern der Streueinstellungen der landwirtschaftlichen Streumaschine während des Streuvorgangs unter Berücksichtigung der von der Datenverarbeitungseinrichtung ermittelten zu erwartenden Entwicklung der Streufächereigenschaften des zumindest einen von der landwirtschaftlichen Streumaschine erzeugten Streufächers zu veranlassen. Die landwirtschaftliche Streumaschine ist vorzugsweise als Düngerstreuer, insbesondere als Zweischeiben-Zentrifugal-Düngerstreuer ausgebildet. Die Echtzeitsimulation des Streuvorgangs wird somit durch die landwirtschaftliche Streumaschine selbst durchgeführt.

Es ist ferner eine landwirtschaftliche Streumaschine bevorzugt, welche dazu eingerichtet ist, das Verfahren zum Ausbringen von Streugut nach einer der vorstehend beschriebenen Ausführungsformen auszuführen. Hinsichtlich der Vorteile und Modifikationen einer solchen landwirtschaftlichen Streumaschine wird auf die Vorteile und Modifikationen des erfindungsgemäßen Verfahrens zum Ausbringen von Streugut verwiesen.

Die der Erfindung zugrundeliegende Aufgabe wird außerdem durch ein System zum Ausbringen von Streugut der eingangs genannten Art gelöst, wobei der maschinenexterne Simulationscomputer des erfindungsgemäßen Systems dazu eingerichtet ist, eine zu erwartende Entwicklung von Streufächereigenschaften zumindest eines von der landwirtschaftlichen Streumaschine erzeugten Streufächers während eines aktuellen Streuvorgangs der landwirtschaftlichen Streumaschine zu ermitteln. Die landwirtschaftliche Streumaschine des erfindungsgemäßen Systems weist eine Steuerungseinrichtung auf, welche dazu eingerichtet ist, ein vorausschauendes Verändern der Streueinstellungen der landwirtschaftlichen Streumaschine während des Streuvorgangs unter Berücksichtigung der von dem maschinenexternen Simulationscomputer ermittelten zu erwartenden Entwicklung der Streufächereigenschaften des zumindest einen von der landwirtschaftlichen Streumaschine erzeugten Streufächers zu veranlassen. Der Simulationscomputer kann ein Terminal des Träger- oder Zugfahrzeugs der landwirtschaftlichen Streumaschine sein, wobei die Datenübertragung zwischen der landwirtschaftlichen Streumaschine und dem maschinenexternen Simulationscomputer in diesem Fall kabellos oder kabelgebunden erfolgen kann. Alternativ kann der maschinenexterne Simulationscomputer ein mobiles oder ein entfernt positioniertes Computersystem sein, welches beispielsweise von dem Hersteller der landwirtschaftlichen Streumaschine betrieben wird. In diesem Fall erfolgt die Datenübertragung vorzugsweise kabellos, insbesondere über Funk und/oder unter Nutzung des Internets.

In einer anderen bevorzugten Ausführungsform des erfindungsgemäßen Systems ist dieses dazu eingerichtet, das Verfahren zum Ausbringen von Streugut nach einem der vorstehend beschriebenen Ausführungsformen auszuführen. Hinsichtlich der Vorteile und Modifikationen eines solchen Systems wird auf die Vorteile und Modifikationen des erfindungsgemäßen Verfahrens zum Ausbringen von Streugut verwiesen.

Nachfolgend wird eine bevorzugte Ausführungsform der Erfindung unter Bezugnahme auf die beiliegende Zeichnung näher erläutert und beschrieben. Dabei zeigt:

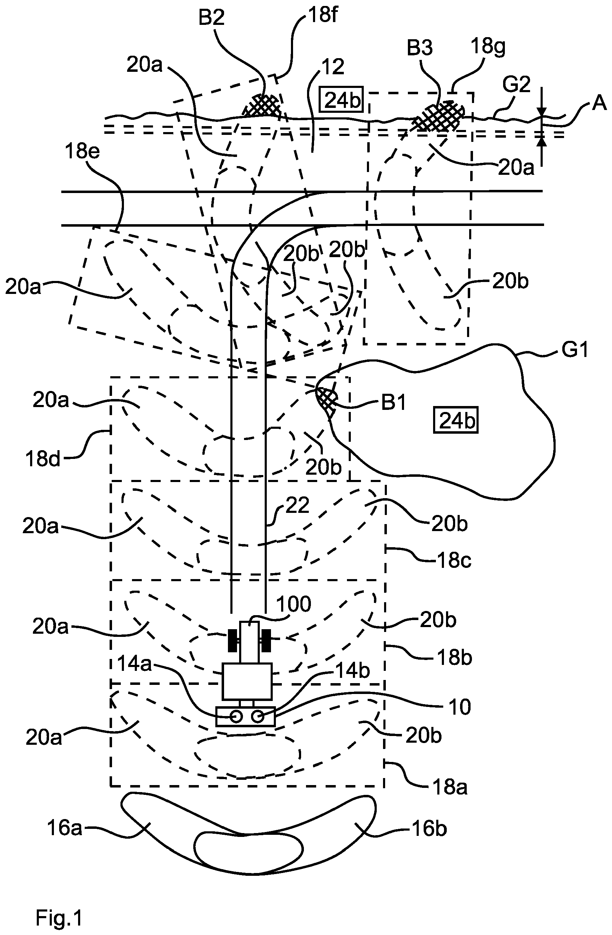

- Fig. 1: eine landwirtschaftliche Streumaschine während des Ausführens des erfindungsgemäßen Verfahrens zum Ausbringen von Streugut auf eine landwirtschaftliche Nutzfläche.

Die Fig. 1 zeigt eine landwirtschaftliche Streumaschine 10, welche als Zweischeiben-Zentrifugal-Düngerstreuer ausgebildet ist. Entsprechend weist die landwirtschaftliche Streumaschine 10 zwei nebeneinander und beabstandet voneinander angeordnete Streuscheiben 14a, 14b auf. Die landwirtschaftliche Streumaschine 10 wird von einem als Traktor ausgebildeten Trägerfahrzeug 100 getragen, wobei die Ausbringung des Streuguts auf einer landwirtschaftlichen Nutzfläche 12 erfolgt. In einer nicht dargestellten Ausführungsform ist die landwirtschaftliche Streumaschine 10 als gezogene Maschine ausgebildet und wird von dem als Traktor ausgebildeten Trägerfahrzeug 100 gezogen. Im Nahbereich der landwirtschaftlichen Nutzfläche 12 befinden sich Verbotszonen 24a, 24b, in welchen eine Streugutausbringung gänzlich zu vermeiden ist oder in welchen eine Toleranzmenge an Streugut nicht überschritten werden darf.

Die Verbotszone 24a wird durch das Gewässer G1 definiert. Die Verbotszone 24b wird durch das Gewässer G2 und den Abstand A definiert, da die Streugutausbringung aufgrund von regionalen Abstandsauflagen nicht nur im Bereich des Gewässers G2, sondern auch in einem Bereich, welcher über die Grenze des Gewässers G2 hinausgeht, zu vermeiden ist. Die landwirtschaftliche Streumaschine 10 befährt in dem dargestellten Zustand die Fahrspur 22 und erzeugt aufgrund des Streugutauswurfs die sich überlappenden Streufächer 16a, 16b.

Die landwirtschaftliche Streumaschine 10 weist eine Datenverarbeitungseinrichtung auf, über welche die zu erwartende Entwicklung 18a-18g der Streufächereigenschaften der erzeugten Streufächer 20a, 20b während des aktuellen Streuvorgangs ermittelt werden kann. Über eine Steuerungseinrichtung der landwirtschaftlichen Streumaschine 10 können dann die Streueinstellungen der landwirtschaftlichen Streumaschine 10 während des Streuvorgangs unter Berücksichtigung der zu erwartenden Entwicklung 18a-18g der Streufächereigenschaften vorausschauend verändert werden.

Damit bei dem vorausschauenden Verändern der Streueinstellungen der landwirtschaftlichen Streumaschine 10 auch die Verbotszonen 24a, 24b berücksichtigt werden können, werden diese durch die landwirtschaftliche Streumaschine 10 ermittelt. Hierzu werden Positionsdaten der Verbotszonen 24a, 24b von einer Datenbank abgerufen und der Datenverarbeitungseinrichtung bereitgestellt. Beim Ermitteln der zu erwartenden Entwicklung 18a-18g der Streufächereigenschaften der Streufächer 20a, 20b wird außerdem die aktuelle Position sowie die geplante Positionsänderung der landwirtschaftlichen Streumaschine während des Streuvorgangs berücksichtigt. Zur Ermittlung der aktuellen Position der landwirtschaftlichen Streumaschine wird ein satellitengestütztes Positionserfassungssystem, nämlich ein GPS-System, genutzt.

Beim Ermitteln der zu erwartenden Entwicklung 18a-18g der Streufächereigenschaften der Streufächer 20a, 20b werden außerdem die geplanten Veränderungen der Maschineneinstellungen der landwirtschaftlichen Streumaschine für den geplanten Streuvorgang sowie zu erwartende Umwelt- und Geländeeinflüsse berücksichtigt. Die geplanten Veränderungen der Maschineneinstellungen der landwirtschaftlichen Streumaschine 10 können dabei die geplanten Veränderungen des Aufgabepunkts des Streuguts auf die Streuscheiben 12a, 12b, die geplanten Veränderungen der Scheibendrehzahl der Streuscheiben 12a, 12b und/oder die geplanten Veränderungen der Aufgabemenge des Streuguts auf die Streuscheiben 12a, 12b während des aktuellen Streuvorgangs betreffen. Im Rahmen der Ermittlung der zu erwartenden Entwicklung 18a-18g der Streufächereigenschaften wird auch die zu erwartende Entwicklung 18a-18g der Streufächerausdehnung, der Streufächerposition und der Streufächerform ermittelt.

Während der Ausbringung von Streugut wird erfasst, dass trotz einer geplanten Veränderung der Streuparameter im Bereich des Gewässers G1 eine Streugutausbringung in der Verbotszone 24a erfolgen wird. Die in dem Bereich B1 bei Ausführung des geplanten Streuvorgangs zu erwartende Streugutausbringung ist somit durch ein vorausschauendes Verändern der Streueinstellungen der landwirtschaftlichen Streumaschine 10 zu verhindern. Dies kann beispielsweise durch ein vorausschauendes Anpassen des Aufgabepunkts des Streuguts auf die Streuscheibe 14b erfolgen, wodurch der Abwurfwinkel des Streuguts und somit die Streufächerform und die Streufächergröße des Streufächers 20b verändert wird.

Ferner werden beim Ermitteln der zu erwartenden Entwicklung 18a-18g der Streufächereigenschaften der Streufächer 20a, 20b bevorstehende Fahrtrichtungsänderungen der landwirtschaftlichen Streumaschine 10 berücksichtigt. Hierbei ist insbesondere die Veränderung der Streufächerposition während der Kurvenfahrt relevant. Die zu erwartenden Entwicklungen 18e, 18f der Streufächer 20a, 20b zeigen, dass die Streufächer 20a, 20b während der Kurvenfahrt mit einem sich ändernden Versatz in die kurvenäußere Richtung verschwenkt werden. Dies hängt hier damit zusammen, dass die landwirtschaftliche Streumaschine 10 beabstandet von der Drehachse des Ausbringgespanns aus Trägerfahrzeug 100 und Streumaschine 10 angeordnet ist. Eine weitere Ursache liegt darin, dass die Streufächer 20a, 20b von der Streumaschine 10 nach hinten abgeworfen werden.

Wenn sich, wie im vorliegenden Fall, im Kurvenbereich eine Verbotszone 24b befindet, ist insbesondere der kurvenäußere Streufächer 20a hinsichtlich seiner Streufächerausdehnung zu überprüfen. Im vorliegenden Fall würde in den Bereichen B2, B3 eine Ausbringung von Streugut innerhalb der Verbotszone 24b erfolgen. Dies ist durch ein vorausschauendes Verändern der Streueinstellungen während der Kurvenfahrt zu verhindern. Während der Kurvenfahrt kann beispielsweise der Aufgabepunkt des Streuguts auf die Streuscheibe 14a derart angepasst werden, dass eine Streugutausbringung in der Verbotszone 24b vermieden wird.

Das Ermitteln der zu erwartenden Entwicklung 18a-18g der Streufächereigenschaften erfolgt in dem dargestellten Ausführungsbeispiel, wie zuvor erläutert, durch eine Datenverarbeitungseinrichtung der landwirtschaftlichen Streumaschine 10. Alternativ kann das Ermitteln der zu erwartenden Entwicklung 18a-18g der Streufächereigenschaften jedoch auch durch einen maschinenexternen Simulationscomputer erfolgen. In diesem Fall werden Ermittlungsergebnisse oder aus den Ermittlungsergebnissen abgeleitete Einstellvorgaben von dem maschinenexternen Simulationscomputer an die landwirtschaftliche Streumaschine 10 übermittelt, sodass die landwirtschaftliche Streumaschine 10 die Streueinstellungen während des Streuvorgangs vorausschauend verändern kann.

Der maschinenexterne Simulationscomputer kann beispielsweise ein Terminal, insbesondere in Terminal des Trägerfahrzeugs 100 sein. Alternativ kann der maschinenexterne Simulationscomputer auch Bestandteil eines mobilen oder eines entfernt positionierten Computersystems sein, welches beispielsweise vom Hersteller der landwirtschaftlichen Streumaschine 10 betrieben wird. Die Übermittlung von Daten zwischen dem maschinenexternen Simulation scomputer und der landwirtschaftlichen Streumaschine 10 kann kabelgebunden oder kabellos erfolgen. Bei der kabellosen Datenübertragung kann die Datenübertragung per Funk und/oder unter Nutzung des Internets erfolgen.

Das vorausschauende Verändern der Streueinstellungen der landwirtschaftlichen Streumaschine 10 kann alternativ oder zusätzlich zum vorausschauenden Anpassen des Aufgabepunkts des Streuguts auf die Streuscheiben 12a, 12b auch durch ein vorausschauendes Aktivieren und/oder Deaktivieren von Teilbreiten einer Teilbreitenschaltung der landwirtschaftlichen Streumaschine 10, durch ein vorausschauendes Anpassen der Scheibendrehzahl der Streuscheiben 12a, 12b und/oder durch ein vorausschauendes Anpassen der Aufgabemenge des Streuguts auf die Streuscheiben 12a, 12b erfolgen.

### Bezugszeichenliste

- 10: Streumaschine
- 12: Nutzfläche
- 14a, 14b: Streuscheiben
- 16a, 16b: aktuelle Streufächer
- 18a-18g: zu erwartende Entwicklungen der Streufächereigenschaften
- 20a, 20b: zu erwartende Streufächer
- 22: Fahrspur
- 24a, 24b: Verbotszonen

- 100: Trägerfahrzeug

- A: Abstand
- B1-B3: Bereiche
- G1, G2: Gewässer

## Patentansprüche

1. Verfahren zum Ausbringen von Streugut auf eine landwirtschaftliche Nutzfläche (12) mittels einer landwirtschaftlichen Streumaschine (10), **gekennzeichnet durch** die Schritte:
- Ermitteln einer zu erwartenden Entwicklung (18a-18g) von Streufächereigenschaften zumindest eines von der landwirtschaftlichen Streumaschine (10) erzeugten Streufächers (20a, 20b) während eines aktuellen Streuvorgangs; und
- vorausschauendes Verändern der Streueinstellungen der landwirtschaftlichen Streumaschine (10) während des aktuellen Streuvorgangs unter Berücksichtigung der ermittelten zu erwartenden Entwicklung (18a-18g) der Streufächereigenschaften des zumindest einen von der landwirtschaftlichen Streumaschine (10) erzeugten Streufächers (20a, 20b).

2. Verfahren nach Anspruch 1,
**dadurch gekennzeichnet, dass** beim Ermitteln der zu erwartenden Entwicklung (18a-18g) der Streufächereigenschaften des zumindest einen von der landwirtschaftlichen Streumaschine (10) erzeugten Streufächers (20a, 20b) für den aktuellen Streuvorgang bevorstehende Fahrtrichtungsänderungen der landwirtschaftlichen Streumaschine (10) berücksichtigt werden.

3. Verfahren nach Anspruch 1 oder 2,
**dadurch gekennzeichnet, dass** das Ermitteln der zu erwartenden Entwicklung (18a-18g) der Streufächereigenschaften des zumindest einen von der landwirtschaftlichen Streumaschine (10) erzeugten Streufächers (20a, 20b) durch eine Datenverarbeitungseinrichtung der landwirtschaftlichen Streumaschine (10) oder durch einen maschinenexternen Simulationscomputer erfolgt.

4. Verfahren nach einem der vorstehenden Ansprüche,
**dadurch gekennzeichnet, dass** das Ermitteln der zu erwartenden Entwicklung (18a-18g) der Streufächereigenschaften des zumindest einen von der landwirtschaftlichen Streumaschine (10) erzeugten Streufächers (20a, 20b) zumindest einen der folgenden Schritte umfasst:
- Ermitteln der zu erwartenden Entwicklung (18a-18g) der Streufächerausdehnung des zumindest einen von der landwirtschaftlichen Streumaschine (10) erzeugten Streufächers (20a, 20b) während des aktuellen Streuvorgangs;
- Ermitteln der zu erwartenden Entwicklung (18a-18g) der Streufächerposition und/oder der Streufächerform des zumindest einen von der landwirtschaftlichen Streumaschine (10) erzeugten Streufächers (20a, 20b) während des aktuellen Streuvorgangs.

5. Verfahren nach einem der vorstehenden Ansprüche,
**dadurch gekennzeichnet, dass** beim Ermitteln der zu erwartenden Entwicklung (18a-18g) der Streufächereigenschaften des zumindest einen von der landwirtschaftlichen Streumaschine (10) erzeugten Streufächers (20a, 20b)
- für den aktuellen Streuvorgang geplante Veränderungen der Maschineneinstellungen der landwirtschaftlichen Streumaschine (10);
- für den aktuellen Streuvorgang zu erwartende Umwelt- und/oder Geländeeinflüsse;
- für den aktuellen Streuvorgang geplante Positionsveränderungen der landwirtschaftlichen Streumaschine (10); und/oder
- aktuelle Positionsveränderungen der landwirtschaftlichen Streumaschine (10)
berücksichtigt werden.

6. Verfahren nach Anspruch 5,
**dadurch gekennzeichnet, dass** die beim Ermitteln der zu erwartenden Entwicklung (18a-18g) der Streufächereigenschaften des zumindest einen von der landwirtschaftlichen Streumaschine (10) erzeugten Streufächers (20a, 20b) berücksichtigten geplanten Veränderungen der Maschineneinstellungen der landwirtschaftlichen Streumaschine (10) eine oder mehrere der folgenden Veränderungen sind:
- geplante Veränderungen des Aufgabepunkts des Streuguts auf zumindest eine Streuscheibe (12a, 12b) der landwirtschaftlichen Streumaschine (10) während des aktuellen Streuvorgangs;
- geplante Veränderungen der Scheibendrehzahl der zumindest einen Streuscheibe (12a, 12b) der landwirtschaftlichen Streumaschine (10) während des aktuellen Streuvorgangs;
- geplante Veränderung der Aufgabemenge des Streuguts auf zumindest eine Streuscheibe (12a, 12b) der landwirtschaftlichen Streumaschine (10) während des aktuellen Streuvorgangs;
- geplante Veränderungen des Lenkwinkels der landwirtschaftlichen Streumaschine (10) während des aktuellen Streuvorgangs;
- geplante Veränderungen der Bewegungsgeschwindigkeit der landwirtschaftlichen Streumaschine (10) während des aktuellen Streuvorgangs.

7. Verfahren nach Anspruch 5 oder 6,
**dadurch gekennzeichnet, dass** die beim Ermitteln der zu erwartenden Entwicklung (18a-18g) der Streufächereigenschaften des zumindest einen von der landwirtschaftlichen Streumaschine (10) erzeugten Streufächers (20a, 20b) berücksichtigten zu erwartenden Umwelt- und/oder Geländeeinflüsse einen oder beide der folgenden Einflüsse umfassen:
- zu erwartende Veränderungen der Windstärke und/oder Windrichtung;
- zu erwartende Veränderungen in der Neigung der während des Streuvorgangs zu befahrenden landwirtschaftlichen Nutzfläche (12).

8. Verfahren nach einem der vorstehenden Ansprüche,
**dadurch gekennzeichnet, dass** beim Ermitteln der zu erwartenden Entwicklung (18a-18g) der Streufächereigenschaften des zumindest einen von der landwirtschaftlichen Streumaschine (10) erzeugten Streufächers (20a, 20b)
- die aktuelle Position, Geschwindigkeit und/oder Beschleunigung der landwirtschaftlichen Streumaschine (10); und/oder
- Materialeigenschaften des auszubringenden Streuguts berücksichtigt werden.

9. Verfahren nach einem der vorstehenden Ansprüche,
**gekennzeichnet durch** den Schritt:
- Ermitteln von einer oder mehreren Verbotszonen (24a, 24b) im Nahbereich der landwirtschaftlichen Nutzfläche (12), in welchen eine Streugutausbringung gänzlich zu vermeiden ist oder in welchen eine Toleranzmenge an Streugut nicht zu überschreiten ist;
wobei das vorausschauende Verändern der Streueinstellungen der landwirtschaftlichen Streumaschine (10) während des aktuellen Streuvorgangs unter Berücksichtigung der ermittelten Verbotszonen (24a, 24b) erfolgt.

10. Verfahren nach Anspruch 9,
**dadurch gekennzeichnet, dass** das vorausschauende Verändern der Streueinstellungen der landwirtschaftlichen Streumaschine (10) erfolgt, wenn die ermittelte zu erwartende Entwicklung (18a-18g) der Streufächereigenschaften eine Streugutausbringung in einer Verbotszone oder die Überschreitung einer Toleranzmenge an Streugut einer Verbotszone erwarten lässt.

11. Verfahren nach einem der Ansprüche 9 oder 10,
**gekennzeichnet durch** den Schritt:
- Abrufen von Verbotskriterien zu der einen oder den mehreren ermittelten Verbotszonen im Nahbereich der landwirtschaftlichen Nutzfläche (12),
wobei das vorausschauende Verändern der Streueinstellungen der landwirtschaftlichen Streumaschine (10) während des Streuvorgangs unter Berücksichtigung der abgerufenen Verbotskriterien erfolgt.

12. Verfahren nach einem der vorstehenden Ansprüche,
**dadurch gekennzeichnet, dass** das vorausschauende Verändern der Streueinstellungen der landwirtschaftlichen Streumaschine (10) zumindest einen der folgenden Schritte umfasst:
- vorausschauendes Aktivieren und/oder Deaktivieren von Teilbreiten einer Teilbreitenschaltung der landwirtschaftlichen Streumaschine (10);
- vorrausschauendes Anpassen des Aufgabepunkts des Streuguts auf die zumindest eine Streuscheibe (12a, 12b) der landwirtschaftlichen Streumaschine (10);
- vorrausschauendes Anpassen der Scheibendrehzahl der zumindest einen Streuscheibe (12a, 12b) der landwirtschaftlichen Streumaschine (10);
- vorrausschauendes Anpassen der Aufgabemenge des Streuguts auf zumindest eine Streuscheibe (12a, 12b) der landwirtschaftlichen Streumaschine (10);
- vorausschauendes Anpassen der Fahrspur und/oder der Fahrroute der landwirtschaftlichen Streumaschine (10).

13. Landwirtschaftliche Streumaschine (10), insbesondere Düngerstreuer, **gekennzeichnet durch**:
- eine Datenverarbeitungseinrichtung, welche dazu eingerichtet ist, eine zu erwartende Entwicklung (18a-18g) von Streufächereigenschaften zumindest eines von der landwirtschaftlichen Streumaschine (10) erzeugten Streufächers (20a, 20b) während eines aktuellen Streuvorgangs zu ermitteln; und
- eine Steuerungseinrichtung, welche dazu eingerichtet ist, ein vorausschauendes Verändern der Streueinstellungen der landwirtschaftlichen Streumaschine (10) während des Streuvorgangs unter Berücksichtigung der von der Datenverarbeitungseinrichtung ermittelten zu erwartenden Entwicklung (18a-18g) der Streufächereigenschaften des zumindest einen von der landwirtschaftlichen Streumaschine (10) erzeugten Streufächers (20a, 20b) zu veranlassen.

14. Landwirtschaftliche Streumaschine (10) nach Anspruch 13,
**dadurch gekennzeichnet, dass** die landwirtschaftliche Streumaschine (10) dazu eingerichtet ist, das Verfahren zum Ausbringen von Streugut nach einem der Ansprüche 1 bis 12 auszuführen.

15. System zum Ausbringen von Streugut auf eine landwirtschaftliche Nutzfläche (12), mit
- einer landwirtschaftlichen Streumaschine (10); und
- einem maschinenexternen Simulationscomputer;
wobei zwischen der landwirtschaftlichen Streumaschine (10) und dem maschinenexternen Simulationscomputer eine Kommunikationsverbindung zum, vorzugsweise drahtlosen, Übertragen von Daten besteht; **dadurch gekennzeichnet, dass**
- der maschinenexterne Simulationscomputer dazu eingerichtet ist, eine zu erwartende Entwicklung (18a-18g) von Streufächereigenschaften zumindest eines von der landwirtschaftlichen Streumaschine (10) erzeugten Streufächers (20a, 20b) während eines aktuellen Streuvorgangs der landwirtschaftlichen Streumaschine (10) zu ermitteln; und
- die landwirtschaftliche Streumaschine (10) eine Steuerungseinrichtung aufweist, welche dazu eingerichtet ist, ein vorausschauendes Verändern der Streueinstellungen der landwirtschaftlichen Streumaschine (10) während des Streuvorgangs unter Berücksichtigung der von dem maschinenexternen Simulationscomputer ermittelten zu erwartenden Entwicklung (18a-18g) der Streufächereigenschaften des zumindest einen von der landwirtschaftlichen Streumaschine (10) erzeugten Streufächers (20a, 20b) zu veranlassen.

16. System nach Anspruch 15,
**dadurch gekennzeichnet, dass** das System dazu eingerichtet ist, das Verfahren zum Ausbringen von Streugut nach einem der Ansprüche 1 bis 12 auszuführen.
